# EUROPÄISCHE PATENTSCHRIFT

(11) **EP 3 536 204 B1**
(45) Veröffentlichungstag und Bekanntmachung des Hinweises auf die Patenterteilung: **11.03.2020**
(21) Anmeldenummer: 19171130.8
(22) Anmeldetag: 22.11.2006
(51) Int. Cl.: A47J 43/06

(54) **HANDRÜHRER MIT UMSCHALTUNG VON KURZZEITBETRIEB AUF DAUERBETRIEB IN ABHÄNGIGKEIT DES ANGEKOPPELTEN ARBEITSWERKZEUGS**
HANDHELD MIXER SWITCHABLE BETWEEN SHORT AND LONG OPERATION DEPENDING ON THE ATTACHED TOOL
MÉLANGEUR À MAIN COMMUTABLE ENTRE UNE DURÉE D'OPÉRATION COURTE ET LONGUE SELON L'OUTIL ATTACHÉ

(30) Priorität: 14.12.2005 DE 102005059697
(43) Veröffentlichungstag der Anmeldung: 11.09.2019
(62) Teilanmeldung aus: 06024166.8
(73) Patentinhaber: De'Longhi Braun Household GmbH, 63263 Neu-Isenburg (DE)
(72) Erfinder: Gili, Sergi, 08820 El Prat de Llobregat Barcelona (ES); Peñaranda, Mariano, 08005 Barcelona (ES); Safont, Vicenc, 08039 Montgat Barcelona (ES); Ràfols, Robert, 08105 Sant Fost de Campcentelles Barcelona (ES); Hernàndez, Alejandro, 43700 El Vendrell Tarragona (ES)
(74) Vertreter: Hoffmann Eitle

(56) Entgegenhaltungen:
- DE-C1- 4 126 721
- FR-A1- 2 794 960

## Beschreibung

Die Erfindung betrifft ein in der Hand zu haltendes elektrisches Rühr- oder Mixgerät, zum Beispiel Handrührer, mit einem in einem Gehäuse aufgenommenen Elektromotor zum wahlweisen Antrieb unterschiedlicher Arbeitswerkzeuge, wie Rühr- oder Knethaken bzw. Pürierstab, mit einem Betätigungselement zum Öffnen oder Schließen eines Schalters zum Ein-/Ausschalten des Elektromotors, wobei der Schalter in Abhängigkeit von der Art des jeweils angekoppelten Arbeitswerkzeuges entweder im Kurzzeitbetrieb oder im Dauerbetrieb betreibbar ist.

### Stand der Technik

Ein derartiges Handrühr- oder Mixgerät ist beispielsweise aus der DE 600 06 695 T2 bekannt. Das Gerät dient dazu, selektiv mindestens ein Rühr-Zusatzgerät, wie beispielsweise einen Quirl oder ein so genanntes Mix-Zusatzgerät, das sich mit hoher Geschwindigkeit dreht, wie beispielsweise einen Mixstab, anzutreiben. Dabei wird im Allgemeinen unter einem Rühr-Zusatzgerät ein Arbeitswerkzeug vom Typ Quirl oder Teigkneter und unter einem Mix-Zusatzgerät ein Ansatz mit einem Arbeitswerkzeug, das mit hoher Geschwindigkeit dreht, zum Beispiel vom Typ Mixstab mit drehbarem Messer, verstanden. Während bei im Handrührer eingesetzten Knet- oder Rührwerkzeugen ein Dauerbetrieb vorgesehen ist, lässt sich das Gerät bei angekoppeltem Pürierstab nur im Kurzzeitbetrieb aktivieren, um Verletzungen an der Messerklinge bei unsachgemäßer Handhabung des Geräts, beispielsweise, wenn dieses unvorhergesehen aus der Hand fällt, zu vermeiden. Auch wird der Pürierstab im Gegensatz zu den Knet- oder Rührwerkzeugen im Allgemeinen nur für sehr kurze Zeitdauer angetrieben, sodass ein andauerndes Betätigen des Betätigungselements durch den Benutzer durchaus zumutbar ist. Wird jedoch das Knet- oder Rührwerkzeug angekoppelt und eingesetzt, besteht die Möglichkeit, das Gerät in Dauerbetrieb zu betreiben, sodass das Betätigungselement des Schalters nicht ständig mittels eines Daumens der Hand des Benutzers zu beaufschlagen ist. Auch ist bei einer unsachgemäßen Handhabung des Gerätes, wenn dieses beispielsweise unvorhergesehen der Hand entgleitet, eine Verletzungsgefahr durch die Knet- oder Rührwerkzeuge nicht sonderlich hoch, da diese im Gegensatz zum Pürierstab scharfkantige Teile nicht aufweisen.

Das bekannte Gerät besitzt insoweit einen Bedienungshebel, der um eine Drehachse drehbar montiert ist, sodass er eine Stoppstellung und mehrere Schaltstellungen für den kontinuierlichen Betrieb des Motors einnehmen kann. Weiterhin ist eine Spiralfeder konzentrisch zur Drehachse des Bedienungshebels montiert und weist ein so genanntes festes Ende, welches mit dem Bedienungshebel verbunden ist, und ein so genanntes freies[HS1] Ende auf. Je nachdem, welches der Werkzeuge mit dem Gerät gekoppelt ist und von diesem angetrieben werden soll, wirkt die Spannung der Spiralfeder auf den Bedienhebel oder nicht. Im erstgenannten Fall wird der Bedienungshebel bei einer Nichtbetätigung unter der Wirkung der Federkraft der Spiralfeder selbsttätig in die Aus-Stellung überführt. Im zweitgenannten Fall, indem die Federkraft der Spiralfeder nicht auf den Bedienungshebel wirkt, verharrt der Bedienungshebel dauerhaft in der jeweiligen Schaltstellung. Dieses bekannte Gerät ist recht kompliziert aufgebaut. Auch besteht das Problem, dass sich der Bedienhebel im Dauerbetrieb wegen fehlender Rastungen bzw. Federvorspannung aufgrund der Vibrationen des Geräts ungewollt verstellt.

Aus der EP 1 092 379 A1 ist ein weiterer elektrisch betriebener Handrührer zum Bearbeiten von Nahrungsmitteln bekannt, der an einem Gehäuse verstellbar angeordnete Schaltmittel mit unterschiedlichen Schaltstellungen zur Aktivierung eines Dauerbetriebs und eines Kurzzeitbetriebs aufweist. Weiterhin besitzt das Gerät Werkzeugaufnahmen zur Halterung verschiedener Werkzeuge, beispielsweise eines Rühr- oder Knethakens oder eines Pürierstabes. Dabei sind zwei Schaltorgane vorgesehen, von denen jeweils eines der Schaltorgane der Aktivierung des Dauerbetriebs und des Kurzzeitbetriebs zugeordnet ist, wobei die beiden Schaltorgane sowie ein Auslöseglied zum Auswerfen eines in einer der Werkzeugaufnahmen gehaltenen Werkzeugs derartig mechanisch miteinander gekoppelt sind, dass immer nur eines der beiden Schalterorgane betätigbar ist.

Die EP 529 266 B1 befasst sich mit einem elektrisch betriebenen Handrührer zum Bearbeiten von Nahrungsmitteln mit einer manuell zu betätigenden elektrischen Schalteinrichtung zur Inbetriebnahme des Elektromotors, dieser wohl eine oder mehrere Schaltstufen für den Dauerbetrieb des Elektromotors als auch mindestens einer Schaltstufe aufweist, bei deren Auswahl der Elektromotor nur so lange in Betrieb (Kurzzeitbetrieb) bleibt, als dieser manuell betätigt wird und mit mehreren zur Halterung und zum Antrieb verschiedener einsetzbarer Arbeitswerkzeuge dienenden Kupplungseinrichtungen, wobei es sich bei den Arbeitswerkzeugen beispielsweise um Knethaken, Schneebesen oder einen ein rotierendes Messer aufweisenden Pürierstab handeln kann. Der Handrührer weist Mittel auf, die dafür sorgen, dass nach dem Einsetzen eines Pürierstabs oder anderer messerähnlicher Arbeitswerkzeuge in die hierfür vorgesehene Kupplungseinrichtung trotz der Aktivierung der Schaltstufen für den Dauerbetrieb eine Verbindung des Elektromotors mit der Spannungsversorgung verhindert wird, während bei manueller Betätigung der Schaltstufe für den Kurzzeitbetrieb der Elektromotor nach wie vor mit der Spannungsversorgung verbunden ist. Die Mittel bestehen u. a. aus einem bei nicht in die für den Pürierstab oder anderer messerähnlich wirkender Arbeitswerkzeuge vorgesehene Kupplungseinrichtung eingesetzten Arbeitswerkzeug geschlossenen elektrischen Schalter, der im Stromkreis für den Dauerbetrieb des Elektromotors liegt und der beim Einsetzen des Pürierstabs oder anderer messerähnlich wirkender Arbeitswerkzeuge in die hierfür vorgesehene Kupplungseinrichtung geöffnet wird, wobei ein Öffnen des Schalters beim Einsetzen des Pürierstabs oder anderer messerähnlich wirkender Arbeitswerkzeuge vor dessen mechanischer Verbindung mit dazugehörigen Kupplungseinrichtung erfolgt und wobei diese Kupplungseinrichtung über eine am Motorgehäuse ausgebildete Öffnung von außen zugänglich ist, die von einer Klappe verschließbar ist. Die Klappe ist durch die Kraft einer Feder selbsttätig in eine Schließstellung überführbar, wobei von der Klappe nur in ihrer Offenstellung der elektrische Schalter, der am Stromkreis für den Dauerbetrieb des Elektromotors liegt, geöffnet wird. Nach Einführen eines Pürierstabs oder einem messerähnlich wirkenden Arbeitswerkzeuge in die hierfür vorgesehene und von der Klappe freigegebene Kupplungseinrichtung hält ein am Arbeitswerkzeug ausgebildeter Anschlag der Klappe entgegen der Kraft der Feder in der Offen-Stellung.

Auch aus der DE 696 00 634 T2 ist ein elektrisch betriebener Handschläger und -Rührer bekannt, bei dem eine Gehäuseöffnung zur Ankupplung eines Arbeitswerkzeugs mittels eines verschiebbaren Schiebers verschließbar ist. Eine ähnliche Schutzvorrichtung gegen Verschmutzung des Inneren des Gehäuses des Küchengeräts ist auch in der DE 60004240 T2 beschrieben, bei der eine verschwenkbare Doppelklappe eine Durchbrechung zur Ankopplung von Arbeitswerkzeugen verschließt. Diese Doppelklappe wird mittels einer Federvorspannung in einer Schließstellung gehalten. Beim Einführen des Arbeitswerkzeugs wird die Doppelklappe durch das Arbeitswerkzeug gegen die Vorspannung der Feder von der Schließstellung in eine Öffnungsstellung verschwenkt. Nach Entfernen des Arbeitswerkzeuges wird die Gehäuseöffnung durch die Doppelklappe erneut selbsttätig geschlossen. Es sei an dieser Stelle darauf hingewiesen, dass sämtliche zum Stand der Technik genannten Druckschriften in Hinblick auf die Maßnahmen Kurzzeitbetrieb/Dauerbetrieb in Abhängigkeit des angekoppelten Werkzeugs sowie Verschließen von Gehäuseöffnungen mittels Schiebern oder Klappen ausdrücklich in den Offenbarungsgehalt der vorliegenden Anmeldung aufgenommen werden. Gleiches gilt für die Anwendungen und Einsatzzwecke derartiger handgehaltener elektrischer Küchengeräte.

Die FR 2 794 960 offenbart Merkmale, die unter den Oberbegriff von Anspruch 1 fallen.

### Problem

Ausgehend von diesem Stand der Technik der eingangs genannten Art liegt der vorliegenden Erfindung die Aufgabe zugrunde, ein in Hand zu haltendes elektrisches Nahrungsmittel-Bearbeitungsgerät dahingehend weiterzubilden, dass es je nach angekoppeltem Arbeitswerkzeug konstruktiv einfach im Kurzzeitbetrieb bzw. im Dauerbetrieb betätigbar ist, sodass angekoppelte Arbeitswerkzeuge, die beispielsweise ein Messer oder einen sonstigen scharfkantigen Gegenstand aufweisen, nur im Kurzzeitbetrieb betrieben werden können, während andere Arbeitsgeräte, die scharfkantige Gegenstände nicht aufweisen oder auch über einen längeren Zeitraum aktiviert werden müssen, im Dauerbetrieb des Geräts betreibbar sind. Dabei zeichnet sich der Kurzzeitbetrieb dadurch aus, dass ein Betätigungselement eines Schalters dauerhaft betätigt werden muss, da bei einer Nichtbetätigung der Schalter selbstständig in die Aus-Stellung zum Abschalten des Gerätes überführt wird. Der Dauerbetrieb zeichnet sich hingegen dadurch aus, dass das Betätigungselement den Schalter auch dann dauerhaft in eine Einstellung, in der das Gerät eingeschaltet ist, überführen kann, ohne dass das Betätigungselement vom Benutzer ständig betätigt wird. Nach einem Nebenaspekt soll auch dafür Sorge getragen werden, dass die zur Ankopplung der unterschiedlichen Arbeitswerkzeuge gerade nicht benötigten Gehäuseöffnungen sicher und dauerhaft verschlossen sind, sodass eine Verschmutzung des Geräts weitestgehend vermieden ist.

### Erfindung und vorteilhafte Wirkungen

Die Erfindung wird durch Anspruch 1 definiert.

Im weiteren ist bei dem handgehaltenen elektrischen Rühr- oder Mixgerät der eingangs genannten Art im Wesentlichen vorteilhaft, dass ein Rastmittel des Betätigungselements des Schalters in Abhängigkeit von der Art des angekoppelten Werkzeugs entweder mit einem Gegenrastmittel in Eingriff steht oder nicht. Ist beispielsweise ein Arbeitswerkzeuge mit einem Messer oder dergleichen scharfkantigen Gegenstand mit dem Handrührer gekoppelt, stehen die Rastmittel des Betätigungselements mit den Gegenrastmitteln nicht in Eingriff, sodass das Betätigungselement nur im Kurzzeitbetrieb den Elektromotor einschalten kann und der Schalter bei Nichtbetätigung des Betätigungselements das Küchengerät selbsttätig in den ausgeschalteten Zustand überführt. Sind hingegen am Küchengerät Knethaken oder zwei Rührbesen angekoppelt, steht das Rastmittel des Betätigungselements des Schalters mit den Gegenrastmitteln in Eingriff, sodass das Betätigungselement und damit auch der Schalter im Dauerbetrieb betreibbar sind und das Küchengerät auch ohne dauerhafte Betätigung des Betätigungselements im eingeschalteten Zustand betrieben werden kann, bis das Betätigungselement tief durch den Benutzer in eine Aus-Stellung überführt wird, in der der Schalter geöffnet und das Handrührgerät ausgeschaltet sind.

Nach einer ersten vorteilhaften Weiterführung der Erfindung ist es vorgesehen, dass das Betätigungselement mit einer Federvorspannung beaufschlagt ist, die das Betätigungselement in die Offenstellung des Schalters zur überführen trachtet. Dies bedeutet, dass das Betätigungselement dann, wenn die Rastmittel und Gegenrastmittel miteinander nicht in Eingriff stehen, der Kurzzeitbetrieb vorprogrammiert ist und das Betätigungselement bei Nichtaktivierung durch den Benutzer automatisch in die Aus-Stellung des Schalters überführt wird. Insoweit wird durch die Erfindung ein Schalter für ein Haushaltsgerät bereitgestellt, der durch ein einziges Betätigungselement betätigbar ist, wobei das Betätigungselement je nachdem, ob die Rastmittel mit den Gegenrastmitteln in Eingriff stehen oder nicht, zur Aktivierung des Kurzzeitbetriebs oder des Dauerbetriebs herangezogen werden kann.

Von Vorteil ist als Betätigungselement eine Wippe, die einen Schaltkontakt des Schalters betätigt. Wird das Betätigungselement nach Art einer Wippe einseitig beaufschlagt, so wird ein Schaltkontakt des Schalters beaufschlagt und in elektrisch leitenden Kontakt mit dem Gegenschaltkontakt gebracht, sodass der Stromkreis geschlossen wird. Gleichzeitig kann dieser Schaltkontakt, den das Betätigungselement beaufschlagt, als Federschenkel oder dergleichen elastisches Element ausgebildet sein, welches die Federvorspannung bereitstellt, mit der das Betätigungselement beaufschlagt ist.

Das Rastmittel des Betätigungselements ist bevorzugt als Nut- und/oder Steganordnung ausgebildet. In die Nuten bzw. zwischen die Stege können dann die Gegenrastmittel eingreifen, um somit für eine definierte Positionierung des Betätigungselements in der eingeschalteten Dauerbetriebsstellung des Schalters zu sorgen.

Als Gegenrastmittel kommt bevorzugt ein mittels einer Federvorspannung beaufschlagter Zapfen, Dorn, Stift oder dergleichen Finger in Betracht. Dieser Finger greift dann in die Rastmittel des Betätigungselements ein, um dieses in der gewählten Schaltstellung zu fixieren.

Nach einer weiteren vorteilhaften Weiterbildung der Erfindung ist es vorgesehen, dass das Gegenrastmittel, insbesondere auf einem Träger oder Schlitten relativ zum Betätigungselement bzw. dessen Rastmittel verstellbar oder verfahrbar gelagert ist. Somit besteht die Möglichkeit, das Gegenrastmittel entweder im Bereich der Rastmittel oder auch außerhalb dieses Bereichs zu positionieren. Die Positionierung erfolgt natürlich in Abhängigkeit von der Art des angekoppelten Arbeitswerkzeuges.

Von besonderem Vorteil ist das Betätigungselement nach Art einer Wippe um eine Schwenkachse verschwenkbar angeordnet, wobei das Gegenrastmittel bzw. dessen Träger in Richtung der Schwenkachse verfahrbar gelagert ist. Somit besteht die Möglichkeit, das Gegenrastmittel bzw. den diesen tragenden Schlitten entlang des Betätigungselements, insbesondere entlang dessen Schwenkachse zu verfahren, sodass das Gegenrastmittel je nach angekoppeltem Werkzeug mit den Rastmitteln des Betätigungselements in Eingriff gelangt oder auch nicht.

Dabei sind von Vorteil die Rastmittel am Betätigungselement über einen ersten Teilabschnitt, insbesondere einer Innenwand angeordnet, wobei an den ersten Teilabschnitt ein zweiter Teilabschnitt anschließt, welcher frei von einem Rastmittel ist. Das Gegenrastmittel wird somit beim Verfahren in Abhängigkeit von der Art des angekoppelten Arbeitswerkzeugs entweder vor den ersten Teilabschnitt mit dem Rastmittel oder vor den zweiten Teilabschnitt, welcher Rastmittel nicht aufweist, verfahren. Sind die Gegenrastmittel benachbart des zweiten Teilabschnitts angeordnet, befindet sich das Betätigungselement im Kurzzeitbetrieb. Sind hingegen die Gegenrastmittel gegenüber dem ersten Teilabschnitt mit den Rastmitteln angeordnet, kann das Betätigungselement auch im Dauerbetrieb betrieben werden.

Dabei bietet es sich an, dass die unterschiedlichen Arbeitswerkzeuge in unterschiedliche, insbesondere benachbarte Öffnungen des Gehäuses einsteckbar und von dem Elektromotor ggf. über ein Getriebe antreibbar sind. Insbesondere sind die beiden Öffnungen für die Rührbesen in einer Bodenplatte des Gehäuses angeordnet, wobei unmittelbar benachbart zu diesen beiden Gehäuseöffnungen die weitere Gehäuseöffnung vorgesehen ist, welche zur Ankopplung des weiteren Arbeitswerkzeugs, zum Beispiel dem Pürierstab mit Messeransatz dient.

Das Gerät zeichnet sich nach einer äußerst vorteilhaften Ausgestaltung des Weiteren dadurch aus, dass wenigstens einer der Öffnungen ein verstellbares Schieberteil zugeordnet ist. Dabei bietet es sich beispielsweise an, dieses Schieberteil, welches auch als Ejektorplatte bezeichnet werden kann, der einen oder den beiden Öffnungen für die Knethaken bzw. den oder die Schneebesen zuzuordnen. Dieses Schieberteil dient dazu, zu detektieren, welches der unterschiedlichen Arbeitswerkzeuge gerade dem Gerät angekoppelt ist. In Abhängigkeit davon, ob das verstellbare Schieberteil nun durch Ankopplung des entsprechenden Arbeitswerkzeuges verstellt wird oder nicht, wird das Betätigungselement bzw. der Schalter entweder im Kurzzeitbetrieb oder im Dauerbetrieb betrieben.

Das Schieberteil zeichnet sich nach einer Ausgestaltung der Erfindung dadurch aus, dass es aus einer Grundposition in eine Endposition bei Ankopplung des Arbeitswerkzeugs durch die zugeordnete Öffnung verfahrbar ist. Werden beispielsweise der oder die Knethaken bzw. Schneebesen angekoppelt, wird das Schieberteil aus der Grundposition in die Endposition verfahren und für einen Eingriff von Rastung und Gegenrastung gesorgt.

Bevorzugt ist das Schieberteil mit den Gegenrastmitteln kinematisch gekoppelt, wobei ggf. zwischen Schieberteil und Gegenrastmittel bzw. Träger oder Schlitten ein Hebel, insbesondere nach Art eines Kipphebels geschaltet ist. Dieser Hebel überträgt die Bewegung des Schieberteils auf das Gegenrastmittel bzw. den Schlitten, welcher das Gegenrastmittel trägt. Dabei schließen die Verstellrichtungen von Schieberteil und Gegenrastmittel bevorzugt an den Winkel von ca. 90 Grad ein.

Zum einen sorgt dieses Schieberteil für eine Erkennung des jeweils angekoppelten Arbeitswerkzeuges, zum anderen kann dieses Schieberteil, auch Auswerferplatte genannt, mittels eines Auswerferknopfes von der Endposition in die Grundposition überführt werden, in der das oder die entsprechenden Arbeitswerkzeuge von dem Gerät entkoppelt werden. Weiterhin werden auch das Gegenrastmittel bzw. der dieses Gegenrastmittel tragende Schlitten unter der Wirkung einer Federvorspannung selbsttätig in die Position überführt, in der Gegenrastmittel und Rastmittel außer Eingriff stehen.

Weiterhin ist es vorgesehen, dass der Auswerferknopf im Wesentlichen direkt benachbart zum Betätigungselement angeordnet ist und weiter aus dem Gehäuse hervorragt als das Betätigungselement. Aufgrund dieser Maßnahme ist dafür gesorgt, dass dann, wenn das Küchengerät dem Benutzer aus der Hand fällt, zunächst der Auswerferknopf betätigt wird, dieser die jeweiligen Arbeitswerkzeuge entkoppelt und weiterhin das Betätigungselement bzw. den Schalter in die Kurzzeit-Betriebsfunktion überführt, wodurch sich das ggf. noch in Betrieb befindliche Gerät selbsttätig ausschaltet.

Die vorteilhafte Ausgestaltung der Erfindung, auch unabhängig von der speziellen Realisierung der Kurzzeit-Betriebs- bzw. Dauerbetriebsfunktion des Schalters sieht vor, dass die mehreren Öffnungen im Gehäuse zum Ankoppeln unterschiedlicher Arbeitswerkzeuge mittels einer Schieberplatte wahlweise verschließbar sind. Aufgrund dieser Maßnahme wird dafür gesorgt, dass die jeweilige Gehäuseöffnung, welche gerade nicht mittels eines Arbeitswerkzeugs belegt ist, dennoch verschlossen ist, sodass Feuchtigkeit und Staub nicht in das Gehäuseinnere des Gerätes eintreten kann.

Bevorzugt ist die Schieberplatte zwischen einer ersten und einer zweiten Endstellung verstellbar, in denen entweder die eine oder mehreren Öffnungen für das eine Arbeitswerkzeug oder die andere Öffnung für das andere Werkzeug verschlossen sind. Somit ist dafür Sorge getragen, dass sämtliche Gehäuseöffnungen zum Ankoppeln der Werkzeuge entweder durch die Werkzeuge selbst oder aber durch die Schieberplatte verschlossen sind.

Von Vorteil ist die Schieberplatte an einem Gehäuseboden, insbesondere einer Innenwand des Bodens verschiebbar gelagert.

Die Schieberplatte weist bevorzugt federelastische Rastarme auf, mit denen diese in den Endstellungen mittels Gegenrastung am Gehäuseboden definiert feststellbar ist.

Weiterhin ist es vorgesehen, dass die Schieberplatte mittels einer abstehenden Handhabe zwischen den Endstellungen verstellbar ist.

Schließlich sei darauf hingewiesen, dass das Gehäuse eine Durchbrechung zum Durchgreifen einer Hand des Benutzers aufweist, wobei die Durchbrechung bevorzugt durch Arme sowie einen diese Arme verbindenden Steg gebildet ist.

### Ausführungsebeispiele

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in schematischer Darstellung und Seitenansicht einen Handrührer mit angekoppeltem ersten Arbeitswerkzeug, zum Beispiel einem Knethaken oder zwei Schneebesen,
- Figur 2: den Handrührer der Figur 1 mit angekoppeltem Pürierstab mit rotierendem Messer,
- Figur 3: ein erstes Ausführungsbeispiel des erfindungsgemäßen Betätigungselements mit Rastung und Gegenrastung sowie Verstellung der Gegenrastung,
- Figur 4: eine vergrößerte Explosionsdarstellung eines Teilausschnitts der Figur 3,

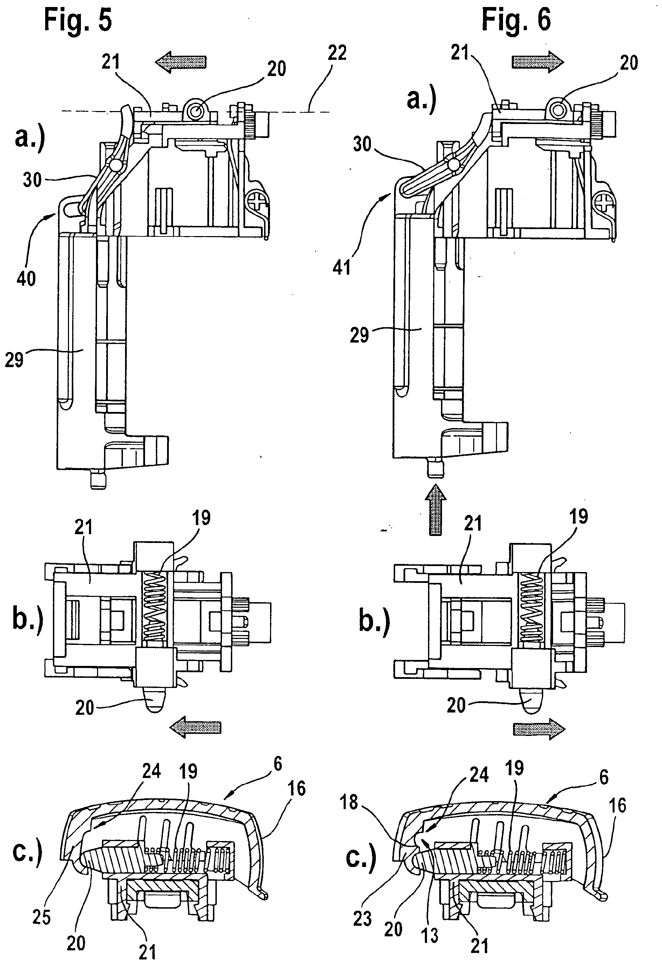

- Figur 5 und 6a, b, c: jeweils in Gegenüberstellung des Ausführungsbeispiels der erfindungsgemäßen Vorrichtung gemäß Figur 3 in der Grundposition 40 sowie in der Endposition 41, wobei die Grundposition die Situation ohne Arbeitswerkzeuge bzw. mit angekoppeltem Pürierstab (Kurzzeitbetrieb) und die Endposition die Situation mit angekoppeltem Knethaken oder Schneebesen wiedergibt, mit Figur a jeweils die Vorrichtung in Seitenansicht, Figur b die Vorrichtung in Draufsicht mit abgenommenen Betätigungselement und Figur c das Betätigungselement sowie die Gegenrastmittel auf den Schlitten in Schnittdarstellung,
- Figuren 7 und 8: den Motor mit angeflanschtem Getriebe jeweils in perspektivischer Darstellung Seitenansicht zur Verdeutlichung der Ankopplungsstellen für die verschiedenen Arbeitswerkzeuge,
- Figur 9: den Gehäuseboden mit hiervon abgenommener Schieberplatte und
- Figuren 10, 11a, b, c: die am Gehäuseboden verschiebbar geführte Schieberplatte jeweils in der ersten und zweiten Endstellung, wobei Figur a eine Sicht auf die Innenwand des Gehäusebodens wiedergibt, Figur b eine Schnittdarstellung entlang der Schnittlinie A-A der Figuren a und Figur c eine Untenansicht des Gehäusebodens wiedergibt.

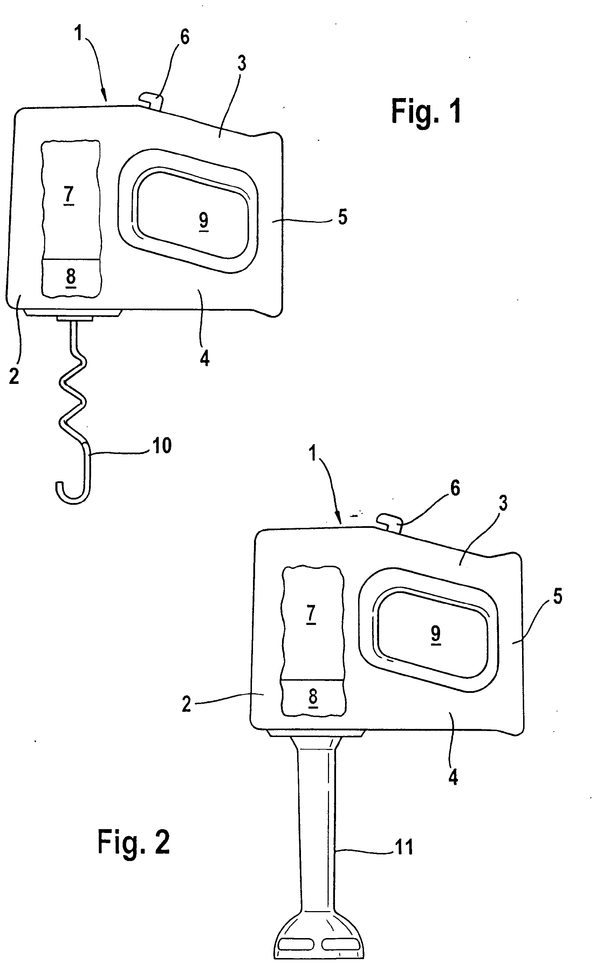

In Figur 1 ist ein Handrührer 1 dargestellt, der im Wesentlichen aus einem mit einem Elektromotor 7 versehenen Gehäuse 2 und einem oberen und unteren Arm 3, 4 besteht, die an ihren freien Enden über einen senkrecht verlaufenden Steg 5 verbunden sind. Der von dem Gehäuse 2, den Arm 3, 4 und dem Steg 5 gebildete Freiraum bildet eine Durchbrechung 9 zur Aufnahme einer Hand des Benutzers, wenn dieser zum Hantieren des Handrührers beispielsweise den oberen Arm 3 teilweise umgreift. An der Oberseite des Gehäuses ist ein Betätigungselement 6 zum Ein- und Ausschalten des Elektromotors 7 angeordnet. Während in Figur 1 ein Knethaken 10 bzw. zwei Schneebesen 10 als Arbeitswerkzeug mit dem Handrührer 1 gekoppelt sind beziehungsweise gekoppelt werden können, ist gemäß Figur 2 ein Pürierstab 11 mit dem Handrührer 1 gekoppelt, wobei dieser Pürierstab in aller Regel ein schnell umlaufendes Messer im Bereich der unteren Glocke aufweist. Weiterhin ist in Figur 1 und 2 schematisch dargestellt, dass zwischen dem Elektromotor 7 und der Ankopplungsstelle für die Arbeitswerkzeuge 10, 11 ein Getriebe angeordnet sein kann.

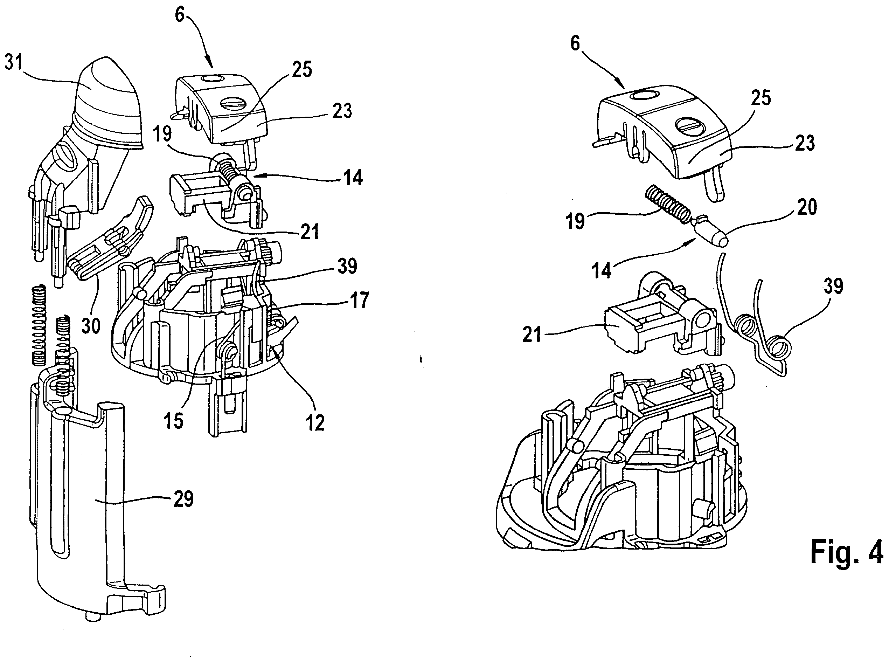

Die in den Figuren 3 bis 6 des Ausführungsbeispiels dargestellten Bauteile schließen sich im Allgemeinen im oberen Bereich des Elektromotors 7 an dem dem Getriebe 8 abgewandten Abschnitt an. Dabei ist insbesondere das Schieberteil 29 derart ausgebildet und angeordnet, dass dieses das im Wesentlichen zylindrische Motorgehäuse teilweise umfasst. Gemäß den Figuren 3 bis 6 ist ein beispielsweise in einer Durchbrechung des Gehäuses 2 angeordnetes Betätigungselement 6 zum Öffnen oder Schließen des Schalters 12 (Figur 3) vorgesehen. Der Schalter 12 dient zum Ein-/Ausschalten des Elektromotors 7, wobei der Schalter 12 in Abhängigkeit von der Arbeit des jeweils angekoppelten Arbeitswerkzeuges, entweder Knethaken oder Schneebesen 10 bzw. Pürierstab 11 mit Messer, entweder im Kurzbetrieb oder im Dauerbetrieb betreibbar ist. Hierzu ist ein Rastmittel 13 (Figur 6c) des Betätigungselements 6 des Schalters 12 vorgesehen, welches in Abhängigkeit von der Art des angekoppelten Werkzeugs 10, 11 entweder mit einem Gegenrastmittel 14 (Figur 6c) in Eingriff steht oder nicht (Figur 5c). Wie beispielsweise aus Figur 3 ersichtlich, ist das Betätigungselement 6 mittels einer Federvorspannung 15, die beispielsweise durch einen elastischen Kontakt des Schalters 12 herbeigeführt werden kann, beaufschlagt, wobei diese Federvorspannung 15 das Betätigungselement 6 in die Offen-Stellung des Schalters 12 zu überführen trachtet. Des Weiteren ist das Betätigungselement 6 bevorzugt als eine Wippe 16 ausgebildet, wobei mittels dieser Wippe 16 beim Verschwenken ein insbesondere elastischer Schaltkontakt 17 des Schalters 12 elektrisch leitend an einen weiteren Schaltkontakt anlegbar ist, sodass hierdurch der elektrische Schalter 12 in die Einschaltstellung überführt wird. Wie beispielsweise aus Figur 6c ersichtlich ist, ist das Rastmittel 13 des Betätigungselements 6 als eine Nut- und/oder Steganordnung 18 ausgebildet. Dabei bietet es sich in Hinblick auf die Gegenrastmittel 14 an, dass diese als ein Finger 20, Zapf, Dorn, Stift oder dergleichen ausgebildet sind, wobei dieser Finger 20 oder dergleichen mittels einer Federvorspannung 19 in Richtung der Rastmittel 13 beaufschlagt ist. Sofern die Rastmittel 13 und Gegenrastmittel miteinander in Eingriff stehen, kann das Betätigungselement 6 von der in Figur 6c gezeigten Aus-Stellung in eine dauerhafte Ein-Stellung überführt werden, indem das Betätigungselement auf der linken Seite gemäß Figur 6c nach unten verschwenkt wird, wobei dann der Finger 20 in der oberen freien Nut der Nut-/Steganordnung 18 eintaucht und das Betätigungselement dauerhaft in dieser Stellung hält, wobei dann ebenfalls der Schalter 12 im Dauerbetrieb eingeschaltet ist.

Wie beispielsweise aus Figur 5, 6b deutlich ersichtlich ist, ist das Gegenrastmittel 14 insbesondere auf einem mit der Spannung einer Feder 39 beaufschlagten Träger oder Schlitten 21 gelagert, wobei dieser Träger oder Schlitten 21 relativ zum Betätigungselement 6 bzw. dessen Rastmittel 13 verstellbar oder verfahrbar gelagert ist. Insbesondere ist das Betätigungselement 6 um eine Schwenkachse 22 (Figur 5a) verschwenkbar angeordnet, wobei das Gegenrastmittel 14 bzw. der Schlitten 21 in Richtung der Schwenkachse 22 verfahrbar gelagert ist. In den Figuren 3, 4 sowie 5, 6c ist dargestellt, dass die Rastmittel 13 am Betätigungselement 6 über einen ersten Teilabschnitt 23 insbesondere einer Innenwand 24 angeordnet sind, wobei an den ersten Teilabschnitt 23 ein zweiter Teilabschnitt 25 anschließt, welcher frei von einem Rastmittel 13 ist.

Insbesondere aus einem Vergleich der Figuren 5 und 6 wird ersichtlich, dass die Gegenrastmittel 14 relativ zum Betätigungselement 6 verstellbar sind, wobei einmal die Rastmittel 13 und Gegenrastmittel 14 ineinandergreifen (Figur 6c) und in einer anderen Positionierung den Gegenrastmitteln 14 Rastmittel 13 nicht zugeordnet sind (Figur 5c). In der Anordnung gemäß Figur 5c wirkt das Betätigungselement 6 und somit auch der Schalter 12 als Kurzzeit-Betriebsschalter, wobei bei Loslassen des Betätigungselements 6 selbsttätig der Schalter 12 in die Offen-Stellung überführt wird.

Die unterschiedlichen Arbeitswerkzeuge 10, 11 sind in unterschiedliche, insbesondere benachbarte Öffnungen 26, 27; 28 des Gehäuses 2 einsteckbar und von dem Elektromotor 7 ggf. über das Getriebe 8 antreibbar. Wenigstens eine der Öffnungen 26, 27 ist ein verstellbares Schieberteil 29 zugeordnet, wie beispielsweise aus den Figuren 5a, 6a sowie 3 ersichtlich ist. Beim Ankoppeln der entsprechenden Arbeitswerkzeuge 10, 11 wird dieses Schieberteil von der in Figur 5 gezeigten Positionierung in die in Figur 6 gezeigte Positionierung überführt, das heißt, im Vergleich von Figur 5a zu Figur 6a nach oben verschoben. Im Allgemeinen wird dies dadurch bewerkstelligt, das ein Schaftende des jeweiligen Arbeitswerkzeugs 10 gegen einen Anschlag des Schieberteils 29 stößt und anschließend das Schieberteil 29 um einen geringen Hubweg verfährt. Insbesondere ist das Schieberteil 29 aus einer in Figur 5a dargestellten Grundposition 40 in eine in Figur 6a dargestellte Endposition 41 verfahrbar, sofern das entsprechende Arbeitswerkzeug 10 durch die zugeordneten Öffnungen 26, 27 an dem Handrührer 1 angekoppelt wird.

Weiterhin ist den Figuren 3, 5, 6a zu entnehmen, dass das Schieberteil 29 mit dem Gegenrastmittel 14 kinematisch gekoppelt ist, wobei ggf. zwischen Schieberteil 29 und Gegenrastmittel 14 bzw. Träger oder Schlitten 21 ein Hebel 30, insbesondere nach Art eines Kipphebels, geschaltet ist. Eine in den Figuren 5a, 6a dargestellte Aufwärtsbewegung des Schieberteils 29 wird mittels des Hebels 30 in eine horizontale Verschiebung des Schlittens 21 bzw. der Gegenrastmittel 14 überführt, wie dies auch mittels der grau schattierten Pfeile in den Figuren 5a, 6a und 5b, 6b angedeutet ist. Auch ist ersichtlich, dass die Verstellrichtungen von Schieberteil 29 und Gegenrastmittel 14 bevorzugt einen Winkel von ca. 90 Grad einschließt. Es versteht sich, dass dieser Winkel auch andere Werte annehmen kann, wobei dann der Hebel 30 entsprechend angepasst auszulegen ist.

Aus der Endposition 41 ist das Schieberteil 29 mittels eines Auswerferknopfes 31 (Figur 3) in die Grundposition 40 überführbar, wobei hierzu der Auswerferknopf 31 in Figur 3 nach unten zu drücken ist. Gegebenenfalls sind zwischen den Auswerferknopf 31 und das Schieberteil 29 federelastische Mittel, wie in Figur 3 dargestellt, geschaltet. Wird der Auswerferknopf 31 betätigt und somit das entsprechende Arbeitswerkzeug vom Handrührer 1 entkoppelt, bewegt sich das Schieberteil 29 in den Figuren 3, 5 wieder nach unten und dementsprechend der Schlitten 21 bzw. die Gegenrastmittel 14, wie in Figur 5a, 5b dargestellt, horizontal nach links, sodass die Gegenrastmittel 14 mit den Rastmitteln 13 außer Eingriff geraten und das Betätigungselement 6 bzw. der Schalter 12 nunmehr nur noch im Kurzzeitbetrieb betreibbar sind, sodass es erforderlich ist, dass der Benutzer dauerhaft, beispielsweise mittels eines Fingers der Hand, das Betätigungselement 6 in der jeweiligen Kippstellung hält.

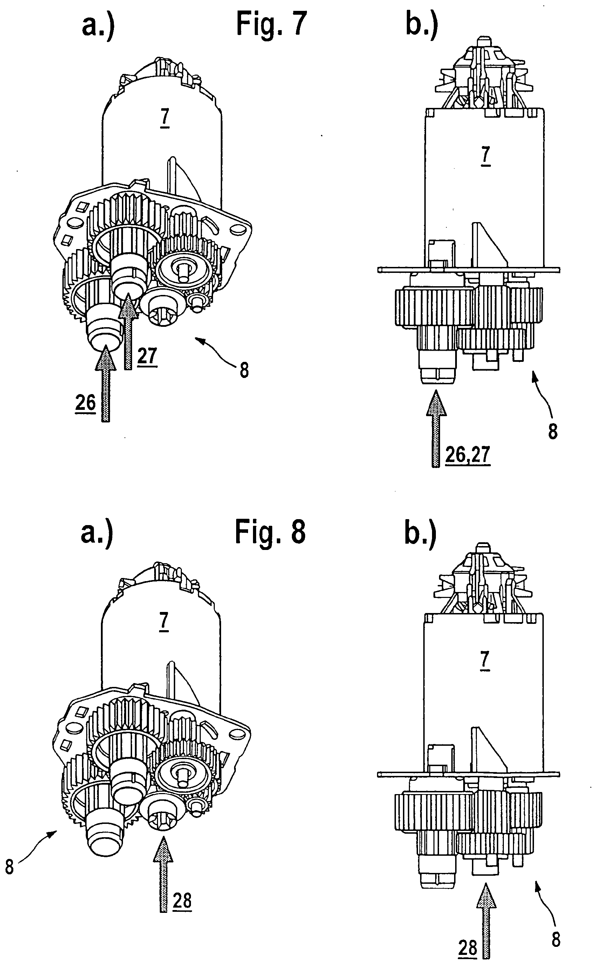

Wie insbesondere aus Figur 3 ersichtlich ist, ist der Auswerferknopf 31 im Wesentlichen direkt benachbart zum Betätigungselement 6 angeordnet und ragt aus dem Gehäuse 2 weiter heraus als das Betätigungselement 6 selbst. Durch diese Maßnahme ist gewährleistet, dass dann, wenn das Gerät versehentlich dem Benutzer aus der Hand fallen sollte und mit den Schaltern beispielsweise auf der Tischplatte oder dem Fußboden aufschlägt, zunächst der Auswerferknopf 31 aktiviert wird, sodass durch Auswerfen der entsprechenden Arbeitswerkzeuge 10 auch das Betätigungselement 6 in die Kurzzeit-Betriebsfunktion überführt wird und dementsprechend der Handrührer 1 selbsttätig ausgeschaltet wird. Die Anordnung zu Zuordnung der Arbeitswerkzeuge, insbesondere zwei Schneebesen 10 in die Öffnungen 26, 27 sowie des Pürierstabs 11 in die Öffnung 28 sind schematisch in den Figuren 7 und 8 dargestellt. Außerdem ist insbesondere den Figuren 7b und 8b zu entnehmen, dass die Rastmittel 13 sowie Gegenrastmittel 14 und auch das Betätigungselement 6 im oberen Bereich des Elektromotors 7 angeordnet sind.

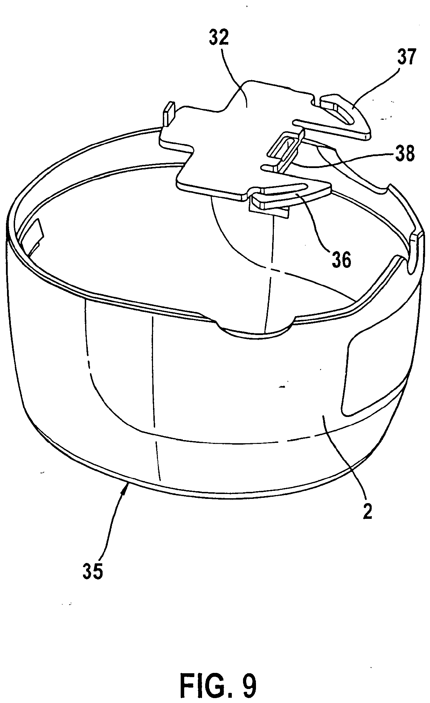

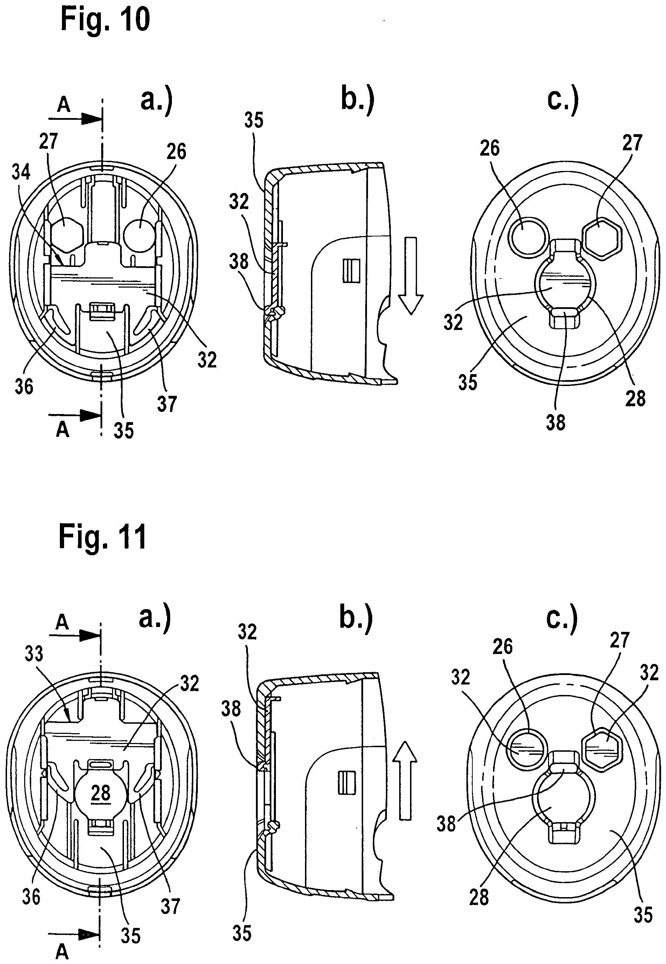

Aus den Figuren 9, 10 und 11 ist ersichtlich, dass die mehreren Öffnungen 26, 27; 28 im Gehäuse 2 zum Ankoppeln der unterschiedlichen Arbeitswerkzeuge 10, 11 mittels einer Schieberplatte 32 wahlweise verschließbar sind. Dabei ist die Schieberplatte 32 zwischen einer ersten Endstellung 33 (Figur 11) und einer zweiten Endstellung 34 (Figur 10) verstellbar, wobei in den beiden Endstellungen entweder die eine oder mehreren Öffnungen 26, 27 für eines der Werkzeuge 10 oder die andere Öffnung 28 für das andere Werkzeug 11 verschlossen sind Gemäß Figur 10a, 11a ist die Schieberplatte 32 an einem Gehäuseboden 35, insbesondere einer Innenwand des Bodens, verschiebbar verlagert. Auch weist die Schieberplatte 32 federelastische Arme 36, 37 auf, mit denen diese in den Endstellungen 33, 34 mittels Gegenrastungen am Gehäuseboden 35 definiert feststellbar ist. Auch ist die Schieberplatte 32 mittels einer abstehenden Handhabe 38 zwischen den Endstellungen 33, 34 durch den Benutzer verstellbar, je nachdem, welches der Arbeitswerkzeuge 10, 11 mit dem Handrührer 1 gekoppelt werden sollen. Aufgrund dieser Maßnahme ist dafür Sorge getragen, dass die jeweils nicht benutzten Öffnungen 26, 27 bzw. 28 von der Schieberplatte 32 verschlossen sind, während die jeweils andere unverschlossene Öffnung 28 bzw. 26, 27 durch die Arbeitswerkzeuge 10, 11 selbst abgedeckt sind. Insgesamt ist aufgrund dieser Maßnahme dafür Sorge getragen, dass Feuchtigkeit und Staub und sonstige Partikel nicht oder nur schwer in das Innere des Gehäuses 2 des Handrührers 1 eindringen können.

## Patentansprüche

1. In der Hand zu haltendes elektrisches Rühr- oder Mixgerät, zum Beispiel Handrührer (1), mit einem in einem Gehäuse (2) aufgenommenen Elektromotor zum wahlweisen Antrieb unterschiedlicher Arbeitswerkzeuge, wie Rühr- oder Knethaken (10) bzw. Pürierstab (11), und mit einem Betätigungselement (6) zum Öffnen oder Schließen eines Schalters (12) zum Ein-/Ausschalten des Elektromotors (7), wobei der Schalter (12) im Kurzzeitbetrieb oder im Dauerbetrieb betreibbar ist,
wobei die unterschiedlichen Arbeitswerkzeuge (10, 11) in unterschiedliche Öffnungen (26, 27; 28) des Gehäuses (2) einsteckbar und von dem Elektromotor (7) antreibbar sind,
**dadurch gekennzeichnet, dass**
die mehreren Öffnungen (26, 27; 28) im Gehäuse (2) zum Ankoppeln unterschiedlicher Arbeitswerkzeuge (10, 11) mittels einer Schieberplatte (32) wahlweise verschließbar sind und
wobei die Schieberplatte (32) zwischen einer ersten und zweiten Endstellung (33, 34) verstellbar ist, in denen entweder die eine oder mehreren Öffnungen (26, 27) für das eine Werkzeug (10) oder die andere Öffnung (28) für das andere Werkzeug (11) verschlossen sind.

2. Gerät nach Anspruch 1, **dadurch gekennzeichnet, dass** das Betätigungselement (6) mit einer Federvorspannung (15) beaufschlagt ist, die das Betätigungselement (6) in die Offen-Stellung des Schalters (12) zu überführen trachtet.

3. Gerät nach Anspruch 1 oder 2, **dadurch gekennzeichnet, dass** das Betätigungselement (6) eine Wippe ist, die einen Schaltkontakt (17) des Schalters (12) betätigt.

4. Gerät nach einem der vorhergehenden Ansprüche, **dadurch gekennzeichnet, dass** das Rastmittel (13) des Betätigungselements (6) als Nut- und/oder Steganordnung (18) ausgebildet ist.

5. Gerät nach einem der vorhergehenden Ansprüche, **dadurch gekennzeichnet, dass** das Gegenrastmittel (14) ein mittels einer Federvorspannung (19) beaufschlagter Zapfen, Dorn oder Stift oder dergleichen Finger ist.

6. Gerät nach einem der vorhergehenden Ansprüche, **dadurch gekennzeichnet, dass** das Gegenrastmittel (14), insbesondere auf einem mit der Spannung einer Feder (39) beaufschlagten Träger oder Schlitten (21) lagert, relativ zum Betätigungselement (6) bzw. dessen Rastmittel (13) verstellbar oder verfahrbar gelagert ist.

7. Gerät nach einem der vorhergehenden Ansprüche, **dadurch gekennzeichnet, dass** die Rastmittel (13) am Betätigungselement (6) über einen ersten Teilabschnitt (23), insbesondere einer Innenwand (24) angeordnet sind, wobei an dem ersten Teilabschnitt (23) ein zweiter Teilabschnitt (25) anschließt, welcher frei von einem Rastmittel (13) ist.

8. Gerät nach einem der vorhergehenden Ansprüche, **dadurch gekennzeichnet, dass** wenigstens eine der Öffnungen (26, 27; 28) ein verstellbares Schieberteil (29) zugeordnet ist, wobei bevorzugt das Schieberteil (29) aus einer Grundposition (40) in eine Endposition (41) verfahrbar ist, sofern das Arbeitswerkzeug (10, 11) durch die zugeordnete Öffnung (26, 27; 28) an den Handrührer (1) angekoppelt ist.

9. Gerät nach Anspruch 8, **dadurch gekennzeichnet, dass** das Schieberteil (29) mit dem Gegenrastmittel (14) kinematisch gekoppelt ist, wobei ggf. zwischen Schieberteil (29) und Gegenrastmittel (14) bzw. Träger oder Schlitten (21) ein Hebel (30), insbesondere nach Art eines Kipphebels, geschaltet ist.

10. Gerät nach einem der Ansprüche 8 bis 9, **dadurch gekennzeichnet, dass** die Verstellrichtungen von Schieberteil (29) und Gegenrastmittel (14) bevorzugt einen Winkel von ca. 90 Grad einschließen.

11. Gerät nach einem der vorhergehenden Ansprüche 8 bis 10, **dadurch gekennzeichnet, dass** das Schieberteil (29) mittels eines Auswerferknopfes (31) von der Endposition (41) in die Grundposition (40) führbar ist, wobei bevorzugt der Auswerferknopf (31) im Wesentlichen direkt benachbart zum Betätigungselement (6) angeordnet ist und weiter aus dem Gehäuse (2) herausragt als das Betätigungselement (6) selbst.

12. Gerät nach einem der vorhergehenden Ansprüche , **dadurch gekennzeichnet, dass** die Schieberplatte (32) an einem Gehäuseboden (35), insbesondere einer Innenwand des Bodens, verschiebbar gelagert ist.

13. Gerät nach einem der vorhergehenden Ansprüche , **dadurch gekennzeichnet, dass** die Schieberplatte (32) federelastische Rastarme (36, 37) aufweist, mit denen diese in den Endstellungen (33, 34) mittels Gegenrastung am Gehäuseboden (35) definiert feststellbar ist.

14. Gerät nach einem der vorhergehenden Ansprüche, **dadurch gekennzeichnet, dass** die Schieberplatte (32) mittels einer abstehenden Handhabe (38) zwischen den Endstellungen (33, 34) verstellbar ist.

15. Gerät nach einem der vorhergehenden Ansprüche, **dadurch gekennzeichnet, dass** das Gehäuse (2) eine Durchbrechung (9) zum Durchgreifen einer Hand des Benutzers aufweist, wobei die Durchbrechung bevorzugt durch Arme (3, 4) sowie einen verbindenden Steg (5) gebildet ist und/oder wobei der Schalter in Abhängigkeit von der Art des jeweils angekoppelten Arbeitswerkzeugs entweder im Kurzzeitbetrieb oder im Dauerbetrieb betreibbar ist, wobei ein Rastmittel des Betätigungselements des Schalters in Abhängigkeit von der Art des angekoppelten Arbeitswerkzeugs entweder mit einem Gegenrastmittel im Eingriff steht oder nicht.

## Claims

1. Handheld stirring or mixing device, for example a hand mixer (1), comprising an electric motor received in a housing (2) for selectively driving different work tools, such as a beater or dough hook (10) or immersion blender (11), and comprising an actuation element (6) for opening or closing a switch (12) for turning the electric motor (7) on/off, wherein the switch (12) can be operated in short-term operation or in continuous operation,
wherein the different work tools (10, 11) can be inserted in different openings (26, 27; 28) in the housing (2) and can be driven by the electric motor (7),
wherein the plurality of openings (26, 27; 28) in the housing (2) can be selectively closed by means of a slide plate (32) in order to attach different work tools (10, 11) and
wherein the slide plate (32) can be moved between a first and second end position (33, 34), in which positions either the one or more openings (26, 27) for one tool (10) or the other opening (28) for the other tool (11) are closed.

2. Device according to claim 1, **characterised in that** a spring preload (15) is applied to the actuation element (6), which spring preload seeks to transfer the actuation element (6) into the open position of the switch (12) .

3. Device according to either claim 1 or claim 2, **characterised in that** the actuation element (6) is a rocker that actuates a switching contact (17) of the switch (12).

4. Device according to any of the preceding claims, **characterised in that** the latching means (13) of the actuation element (6) is designed as a groove and/or web assembly (18).

5. Device according to any of the preceding claims, **characterised in that** the counter-latching means (14) is a stud, bolt or pin or similar finger to which a spring preload (19) is applied.

6. Device according to any of the preceding claims, **characterised in that** the counter-latching means (14), in particular mounted on a carrier or carriage (21) to which the tension of a spring (39) is applied, is mounted so as to be movable or shiftable relative to the actuation element (6) or the latching means (13) thereof.

7. Device according to any of the preceding claims, **characterised in that** the latching means (13) are arranged on the actuation element (6) via a first sub-portion (23), in particular an inner wall (24), a second sub-portion (25) that is free of latching means (13) adjoining the first sub-portion (23).

8. Device according to any of the preceding claims, **characterised in that** at least one of the openings (26, 27; 28) is assigned a movable slide part (29), it preferably being possible to move the slide part (29) out of a start position (40) into an end position (41) if the work tool (10, 11) is attached to the hand mixer (1) by means of the assigned opening (26, 27; 28).

9. Device according to claim 8, **characterised in that** the slide part (29) is kinematically coupled to the counter-latching means (14), a lever (30), in particular in the form of a rocking lever, optionally being connected between the slide part (29) and the counter-latching means (14) or the carrier or carriage (21).

10. Device according to any of claims 8 to 9, **characterised in that** the movement directions of the slide part (29) and counter-latching means (14) preferably form an angle of approx. 90 degrees.

11. Device according to any of claims 8 to 10, **characterised in that** the slide part (29) can be guided from the end position (41) into the start position (40) by means of an ejector button (31), the ejector button (31) preferably being arranged substantially immediately adjacent to the actuation element (6) and preferably projecting further from the housing (2) than the actuation element (6) itself.

12. Device according to any of the preceding claims, **characterised in that** the slide plate (32) is mounted so as to be able to slide on a housing base (35), in particular an inner wall of the base.

13. Device according to any of the preceding claims, **characterised in that** the slide plate (32) comprises resilient latching arms (36, 37) by means of which said slide plate can be locked in a defined manner in the end positions (33, 34) by means of counter-latching on the housing base (35).

14. Device according to any of the preceding claims, **characterised in that** the slide plate (32) can be moved between the end positions (33, 34) by means of a protruding handle (38).

15. Device according to any of the preceding claims, **characterised in that** the housing (2) comprises a through-hole (9) through which a hand of the user can reach, the through-hole preferably being formed by means of arms (3, 4) and a connecting web (5) and/or the switch being operable either in short-term operation or in continuous operation depending on the type of work tool attached in each case, a latching means of the actuation element of the switch either engaging or not engaging with a counter-latching means depending on the type of work tool attached.

## Revendications

1. Appareil d'agitation ou de mélange électrique à tenir à la main, par exemple batteur à main (1), avec un moteur électrique reçu dans un boîtier (2) pour l'entraînement au choix de différents outils de travail, tels que gâche ou pétrisseur (10) ou mixeur à purée (11), et avec un élément d'actionnement (6) pour l'ouverture ou la fermeture d'un commutateur (12) pour la mise en et hors service du moteur électrique (7), dans lequel le commutateur (12) peut être actionné en fonctionnement court ou en fonctionnement continu,
dans lequel les différents outils de travail (10, 11) peuvent être enfichés dans différentes ouvertures (26, 27 ; 28) du boîtier (2) et peuvent être entraînés par le moteur électrique (7),
dans lequel les plusieurs ouvertures (26, 27 ; 28) sont refermables au choix dans le boîtier (2) pour le couplage de différents outils de travail (10, 11) au moyen d'une plaque coulissante (32) et
dans lequel la plaque coulissante (32) est réglable entre une première et seconde position d'extrémité (33, 34) dans lesquelles les une ou plusieurs ouvertures (26, 27) sont fermées pour l'un outil (10) ou l'autre ouverture (28) pour l'autre outil (11).

2. Appareil selon la revendication 1, **caractérisé en ce que** l'élément d'actionnement (6) est sollicité par une précontrainte de ressort (15) qui cherche à transférer l'élément d'actionnement (6) dans la position ouverte du commutateur (12).

3. Appareil selon la revendication 1 ou 2, **caractérisé en ce que** l'élément d'actionnement (6) est une bascule qui actionne un contact de commutation (17) du commutateur (12).

4. Appareil selon l'une quelconque des revendications précédentes, **caractérisé en ce que** le moyen d'encliquetage (13) de l'élément d'actionnement (6) est réalisé comme agencement de rainure et/ou de nervure (18).

5. Appareil selon l'une quelconque des revendications précédentes, **caractérisé en ce que** le moyen d'encliquetage antagoniste (14) est un tenon, une épine ou une tige ou un doigt similaire sollicité au moyen d'une précontrainte de ressort (19).

6. Appareil selon l'une quelconque des revendications précédentes, **caractérisé en ce que** le moyen d'encliquetage antagoniste (14) est logé en particulier sur un support ou chariot (21) sollicité par la tension d'un ressort (39), est logé de manière réglable ou déplaçable par rapport à l'élément d'actionnement (6) ou son moyen d'encliquetage (13).

7. Appareil selon l'une quelconque des revendications précédentes, **caractérisé en ce que** les moyens d'encliquetage (13) sont agencés au niveau de l'élément d'actionnement (6) par le biais d'une première section partielle (23), en particulier une paroi intérieure (24), dans lequel une seconde section partielle (25) est raccordée à la première section partielle (23), laquelle est exempt d'un moyen d'encliquetage (13).

8. Appareil selon l'une quelconque des revendications précédentes, **caractérisé en ce qu'**à au moins une des ouvertures (26, 27 ; 28) est associée une partie coulissante réglable (29), dans lequel de préférence la partie coulissante (29) est déplaçable d'une position de base (40) à une position d'extrémité (41) dans la mesure où l'outil de travail (10, 11) est couplé par l'ouverture associée (26, 27 ; 28) au batteur à main (1).

9. Appareil selon la revendication 8, **caractérisé en ce que** la partie coulissante (29) est couplée cinématiquement au moyen d'encliquetage antagoniste (14), dans lequel un levier (30), en particulier comme un levier de basculement, est monté éventuellement entre la partie coulissante (29) et le moyen d'encliquetage antagoniste (14) ou le support ou chariot (21).

10. Appareil selon l'une des revendications 8 à 9, **caractérisé en ce que** les sens de réglage de la partie coulissante (29) et le moyen d'encliquetage antagoniste (14) forment de préférence un angle d'environ 90 degrés.

11. Appareil selon l'une des revendications précédentes 8 à 10, **caractérisé en ce que** la partie coulissante (29) est guidable au moyen d'un bouton éjecteur (31) de la position d'extrémité (41) dans la position de base (40), dans lequel de préférence le bouton éjecteur (31) est agencé de manière sensiblement directement contiguë à l'élément d'actionnement (6) et dépasse davantage du boîtier (2) que l'élément d'actionnement (6) lui-même.

12. Appareil selon l'une quelconque des revendications précédentes, **caractérisé en ce que** la plaque coulissante (32) est logée de manière mobile sur un fond de boîtier (35), en particulier une paroi intérieure du fond.

13. Appareil selon l'une quelconque des revendications précédentes, **caractérisé en ce que** la plaque coulissante (32) présente des bras d'encliquetage (36, 37) sollicités par ressort avec lesquels ceux-ci peut être fixés de manière définie dans les positions d'extrémité (33, 34) au moyen d'un encliquetage antagoniste au niveau du fond de boîtier (35).

14. Appareil selon l'une quelconque des revendications précédentes, **caractérisé en ce que** la plaque coulissante (32) est réglable au moyen d'un manche (38) s'étendant vers le haut entre les positions d'extrémité (33, 34).

15. Appareil selon l'une quelconque des revendications précédentes, **caractérisé en ce que** le boîtier (2) présente une interruption (9) pour la prise d'une main de l'utilisateur, dans lequel l'interruption est formée de préférence par des bras (3, 4) ainsi qu'une nervure de liaison (5) et/ou dans lequel le commutateur peut être actionné en fonction du type de l'outil de travail couplé respectivement soit en fonctionnement court soit en fonctionnement continu, dans lequel un moyen d'encliquetage de l'élément d'actionnement du commutateur est en prise en fonction du type de l'outil de travail couplé soit avec un moyen d'encliquetage soit ne l'est pas.
